(19) Europäisches Patentamt
European Patent Office
Office européen des brevets

(11) Veröffentlichungsnummer: **0 147 727**
**A1**

(12) # EUROPÄISCHE PATENTANMELDUNG

(21) Anmeldenummer: **84115278.8**

(22) Anmeldetag: **12.12.84**

(51) Int. Cl.[4]: **C 08 L 67/06**
C 08 L 63/10, C 08 K 5/09
C 08 K 5/37, C 08 K 5/42

(30) Priorität: **20.12.83 DE 3345925**

(43) Veröffentlichungstag der Anmeldung:
**10.07.85 Patentblatt 85/28**

(84) Benannte Vertragsstaaten:
**DE FR GB IT**

(71) Anmelder: **BASF Aktiengesellschaft**
**Carl-Bosch-Strasse 38**
**D-6700 Ludwigshafen(DE)**

(72) Erfinder: **Hesse, Anton, Dr. Chem.**
**Peter-Nickel-Strasse 15**
**D-6940 Weinheim(DE)**

(72) Erfinder: **Trautmann, Walter, Dr. Chem.**
**Ritterbueschel 87**
**D-6730 Neustadt(DE)**

(72) Erfinder: **Volkert, Otto, Dr. Chem.**
**Im Eiertal 10**
**D-6719 Weisenheim(DE)**

(54) **Härtbare Polyesterformmassen.**

(57) Härtbare Polyesterformmassen, enthaltend ein Gemisch aus

A. einem ethylenisch ungesättigten Polyester oder einem endständigen ungesättigten Vinylester-Harz,

B. copolymerisierbaren Monomeren,

C. faserförmigen Verstärkungsmitteln,

D. organischen Peroxiden,

E. Eindickmitteln,

F. Eindickbeschleuniger, sowie gegebenenfalls

G. üblichen Zusatzstoffen.

Der Eindickbeschleuniger ist eine α-substituierte Bernsteinsäure, vorzugsweise eine Alkenylbernsteinsäure.

EP 0 147 727 A1

Croydon Printing Company Ltd.

Härtbare Polyesterformmassen

Die Erfindung betrifft eindickfähige ungesättigte Polyesterformmassen mit verkürzter Eindickzeit bei hohem Viskositätsniveau.

Es ist bekannt, daß man bei ungesättigten Polyesterformmassen, die übliche Eindickmittel, z.B. MgO enthalten, die Eindickzeit durch den Zusatz von Wasser oder Propylenglykol verkürzen kann. Dabei wird jedoch das Viskositätsniveau stark erniedrigt.

Der Erfindung lag daher die Aufgabe zugrunde, Eindickbeschleuniger zu entwickeln, die diesen Nachteil nicht aufweisen.

Es wurde gefunden, daß diese Aufgabe gelöst wird, wenn man als Eindickbeschleuniger Alkyl- oder Alkenylbernsteinsäuren einsetzt.

Gegenstand der Erfindung sind härtbare ungesättigte Polyesterformmassen enthaltend ein Gemisch aus

A. einem ethylenisch ungesättigten Polyester oder einem endständigen ungesättigten Vinylester,

B. ethylenisch ungesättigten, mit A copolymerisierbaren Monomeren,

C. 5 bis 400 Gew.-%, bezogen auf A + B, faserförmiger Verstärkungsmittel,

D. 0,1 bis 3 Gew.-%, bezogen auf A + B organischen Peroxiden,

E. 0,2 bis 5 Gew.-%, bezogen auf A + B, eines Eindickmittels,

F. 0,2 bis 5 Gew.-%, bezogen auf A + B, eines Eindickbeschleunigers, sowie gegebenenfalls

G. üblichen schrumpfmindernden oder elastifizierenden organischen Polymeren, pulverförmigen Füllstoffen, Inhibitoren, Gleitmittel, Trennmittel, Pigmente und Härtungsbeschleuniger,

wobei der Eindickbeschleuniger F eine $\alpha$-substituierte Bernsteinsäure ist.

Die anspruchsgemäßen Polyesterformmassen enthalten folgende Bestandteile:

A. Als ethylenisch ungesättigte Polyester eignen sich die üblichen Polykondensationsprodukte aus mehrwertigen, insbesondere zweiwertigen Carbonsäuren und deren veresterbaren Derivaten, insbesondere Anhydriden, die mit mehrwertigen, insbesondere zweiwertigen Alkoholen esterartig verknüpft sind, und gegebenenfalls zusätzlich Reste einwertiger Carbonsäuren und/oder Reste einwertiger Alkohole und/oder Reste von Hydroxycarbonsäuren enthalten, wobei zumindest ein Teil der Reste über ethylenisch ungesättigte copolymerisierbare Gruppen verfügen muß.

Als mehrwertige, insbesondere zweiwertige, gegebenenfalls ungesättigte Alkohole eignen sich die üblichen, insbesondere acyclischen Gruppen, cyclische Gruppen als auch beide Arten von Gruppen aufweisenden Alkandiole und Oxalkandiole, wie z.B. Ethylenglykol, Propylenglykol-1,2, Propandiol-1,3, Butylenglykol-1,3, Butandiol-1,4, Hexandiol-1,6, 2,2-Dimethylpropandiol-1,3, Diethylenglykol, Triethylenglykol, Polyethylenglykol, Dipropylenglykol, Cyclohexandiol-1,2, 2,2-Bis-(hydroxy-cyclohexyl)-propan, Trimethylolpropanmonoallylether oder Butandiol-1,4. Ferner können ein-, drei- oder höherwertige Alkohole, wie z.B. Ethylhexanol, Fettalkohole, Benzylalkohole, 1,2-Di-(allyloxy)-propanol-(3), Glycerin, Pentaerythrit oder Trimethylolpropan in untergeordneten Mengen mitverwendet werden.

Die mehrwertigen, insbesondere zweiwertigen Alkohole werden im allgemeinen in stöchiometrischen oder annähernd stöchiometrischen Mengen mit mehrbasischen, insbesondere zweibasischen Carbonsäuren bzw. deren kondensierbaren Derivaten umgesetzt.

Geeignete Carbonsäure bzw. deren Derivate sind zweibasische olefinisch ungesättigte, vorzugsweise α,β-olefinisch ungesättigte Carbonsäuren, wie z.B. Maleinsäure, Fumarsäure, Chlormaleinsäure, Itaconsäure, Methylenglutarsäure und Mesaconsäure bzw. deren Ester oder vorzugsweise deren Anhydride. In die Polyester können weiterhin zusätzlich andere modifizierend wirkende zweibasische, ungesättigte und/oder gesättigte, sowie aromatische Carbonsäuren, wie z.B. Bernsteinsäure, Glutarsäure, Methylglutarsäure, Adipinsäure, Sebacinsäure, Pimelinsäure, Phthalsäureanhydrid, o-Phthalsäure, Isophthalsäure, Terephthalsäure, Dihydrophthalsäure, Tetrahydrophthalsäure, Tetrachlorphthalsäure, 3,6-Endomethylen-1,2,3,6-tetrahydrophthalsäure, Tetrachlorphthalsäure oder Hexachlorendomethylentetrahydrophthalsäure einkondensiert sein, ferner ein-, drei- und höherbasische Carbonsäuren, wie z.B. Ethylhexansäure, Fettsäuren, Methacrylsäure, Acrylsäure, Fettsäuren, 1,2,4,5-Benzoltetracarbonsäure.

Vorzugsweise verwendet werden Maleinsäure bzw. deren Anhydrid und Fumarsäure.

Auch ungesättigte Polyester, die unter Verwendung von Dicyclopentadien hergestellt wurden, lassen sich vorteilhaft einsetzen.

Gemischte ungesättigte Polyester, darunter auch solche, die in den Vinylmonomeren B nur beschränkt löslich sind und leicht kristallisieren, können ebenfalls vorteilhaft eingesetzt werden. Solche leicht kristallisierende ungesättigte Polyester können z.B. aus Fumarsäure, Adipinsäure, Terephthalsäure, Ethylenglykol, Butandiol--1,4, Hexandiol-1,6 und Neopentylglykol aufgebaut sein.

Die ungesättigten Polyester besitzen Säurezahlen von 5 bis 200, vorzugsweise von 20 bis 85 und mittlere Molekulargewichte von ungefähr 800 bis 6000, vorzugsweise von etwa 1000 bis 4000.

Die amorphen und gegebenenfalls kristallisierbaren ungesättigten Polyester werden im allgemeinen durch Schmelzkondensation oder Kondensation unter azeotropen Bedingungen aus ihren Ausgangskomponenten nach kontinuierlichen oder diskontinuierlichen Verfahren hergestellt.

Geeignete endständig ungesättigte Vinylesterharze im Sinne der Erfindung besitzen die charakterisitische Gruppierung $-CO-OCH_2CHOH-CH_2O-$ und enthalten endständige polymerisierbare ungesättigte Gruppen. Die Vinylesterharze werden hergestellt durch Umsetzung von etwa stöchiometrischen Mengen eines Polyepoxidharzes und einer ungesättigten Monocarbonsäure, beispielsweise Methacrylsäure.

Vinylesterharze der genannten Art werden z.B. beschrieben in der US-PS 3 367 992, wonach Dicarbonsäure-Halbester von Hydroxyacrylaten oder -methacrylaten mit Polyepoxidharzen umgesetzt werden. Gemäß US-PS 3 066 112 und 3 179 623 werden Vinylesterharze aus Monocarbonsäuren, z.B. Acryl- und Methacrylsäure, erhalten; hier wird auch eine alternative Herstellungsmethode genannt, wonach ein Glycidylmethacrylat oder -acrylat mit dem Natriumsalz eines zweiwertigen Phenols, z.B. Bisphenol A, zur Reaktion gebracht wird. Vinylesterharze auf Basis von Epoxi-Novolac-Harzen sind in der US-PS 3 301 743 beschrieben. In der US-PS 3 256 226 werden Vinylesterharze offenbart, bei denen das Molekulargewicht des Polyepoxids vor der Reaktion mit der Acrylsäure durch Umsetzung von 2 Mol Polyepoxid mit 1 Mol einer Dicarbonsäure gesteigert wird. In Betracht kommen ferner

modifizierte Vinylesterharze, beispielsweise solche gemäß DE-OS 25 34 039 (äquivalent zu US-PS 3 947 422) die Halbestergruppen enthalten und durch Reaktion der zweiten Hydroxylgruppe der Gruppierung $-CO-OCH_2.CHOH-CH_2O-$ mit einem Dicarbonsäureanhydrid, z.B. dem Anhydrid der Maleinsäure, Citraconsäure, Phthalsäure, Tetrabromphthalsäure u.a. erhalten werden.

Die erfindungsgemäßen härtbaren Polyesterfrommassen enthalten im allgemeinen 20 bis 90, vorzugsweise 30 bis 80 Gew.-% an Komponente A, bezogen auf das Gesamtgewicht der Komponenten A + B.

B. Als copolymerisierbare, ethylenisch ungesättigte monomere Verbindungen kommen die üblicherweise zum Herstellen ungesättigter Polyesterformmassen verwendeten Allyl- und vorzugsweise Vinylverbindung in Frage, Vinylaromaten, wie Styrol, substituierte Styrole, wie p-Chlorstyrol oder Vinyltoluol, Ester der Acrylsäure und Methacrylsäure mit 1 bis 18 Kohlenstoffatomen enthaltenden Alkoholen, wie Methacrylsäuremethylester, Acrylsäurebutylester, Ethylhexylacrylat, Hydroxypropylacrylat, Dihydrodicyclopentadienylacrylat, Butandioldiacrylat und (Meth)-acrylsäureamide, Allylester, wie Diallylphthalat, und Vinylester wie Ethylhexansäurevinylester, Vinylacetat, Vinylpropionat, Vinylpivalat und andere. Desgleichen eignen sich Gemische der genannten olefinisch ungesättigten Monomeren. Bevorzugt geeignet als Komponente B sind Styrol, p-Methylstyrol, Chlorstyrol, Vinyltoluol, Divinylbenzol und Diallylphthalat. Die Komponente B ist in den Polyesterformmassen im allgemeinen in einer Menge von 10 bis 80, vorzugsweise von 20 bis 70 Gew.-%, bezogen auf das Gesamtgewicht der Komponenten A + B enthalten.

C. Als Verstärkungsfasern kommen in Frage anorganische oder organische Fasern als Rovings oder flächige, gegebenenfalls daraus gewebte Gebilde, wie Matten, z.B. aus Glas, Kohlenstoff, Asbest, Cellulose und synthetischen organischen Fasern, wie Polycarbonsäureester, Polycarbonate und Polyamide.

Die Verstärkungsfasern werden in Mengen von 5 bis 400, vorzugsweise 10 bis 250 Gew.-%, bezogen auf die Komponenten A + B, verwendet.

D. Als Polymerisationsinitiatoren werden übliche, in der Wärme Radikale bildende organische Peroxide in Mengen von 0,1 bis 3 Gew.-%, bezogen auf A + B, eingesetzt. Geeignte Initiatoren sind z.B.: Benzoylperoxid, tert.-Butylperoctoat, tert.-Butylperbenzoat, Dicumylperoxid, Di-tert.-Dibutyl-peroxid und Perketale, wie z.B. Trimethylcyclohexanonperketal, sowie Percarbonate. Hydroperoxide sind nicht geeignet. Vorzugsweise sollen die Peroxide eine Halbwertszeit bei 80°C von mehr als 5 h, insbesondere von mehr als 50 h haben. Reaktive Peroxide, z.B. tert.-Butylperoctoat können zusätzlich in untergeordneten Mengen anwesend sein. Auch CC-labile Verbindungen sowie Azoverbindungen sind geeignet.

E. Geeignete Eindickmittel sind beispielsweise Erdalkalioxide oder -hydroxide, wie Calciumoxid, Calciumhydroxid, Magnesiumhydroxid und vorzugsweise Magnesiumoxid, sowie Gemische dieser Oxide bzw. Hydroxide. Diese können auch ganz oder teilweise durch Zinkoxid ersetzt sein. Die Verdickungsmittel werden den Formmassen in Mengen von 0,2 bis 5, vorzugsweise von 0,5 bis 3 Gew.-%, bezogen auf A + B zugesetzt.

F. Die härtbaren Formmassen enthalten erfindungsgemäß 0,2 bis 5, vorzugsweise 0,4 bis 2 und insbesondere 0,6 bis 1,5 Gew.-%, bezogen auf A + B, einer -substituierten Bernsteinsäure oder auch Mischungen solcher Substanzen als Eindickbeschleuniger.

Bevorzugt weist die substituierte Bernsteinäsure die Formel auf:

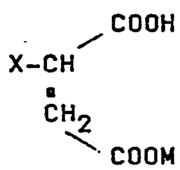

(I)

Der Substituent X kann dabei folgende Bedeutung haben:

a) Ein geradkettiger oder verzweigter Alkenylrest mit 3 bis 18 C-Atomen. Derartige Alkenylbernsteinsäuren können hergestellt werden durch Umsetzung von Olefinen mit Maleinsäureanhydrid bei Temperaturen zwischen 180 und 250°C und anschließender Verseifung.

b) Ein geradkettiger oder verzweigter Alkylrest mit 3 bis 18 C-Atomen. Die Verbindungen können hergestellt werden durch katalytische Hydrierung der entsprechenden Alkenylbernsteinsäuren.

c) Ein geradkettiger oder verzweigter Alkylthiorest mit 3 bis 18 C-Atomen. Die Herstellung dieser Verbindungen kann beispielsweise durch Umsetzung von Mercaptobernsteinsäure mit Olefinen bzw. Alkylbromiden oder durch Addition von Alkylmercaptanen an Maleinsäure-di-Natriumsalz erfolgen.

d) Ein geradkettiger oder verzweigter Alkylsulfonrest mit 3 bis 18 C-Atomen. Sie können durch Oxidation der entsprechenden Alkylmercaptobernsteinsäuren hergestellt werden.

e) Ein geradkettiger oder verzweigter Alkoxyrest mit 3 bis 18 C-Atomen.

Geeignet sind ferner substiuierte Bernsteinsäuren der Formel

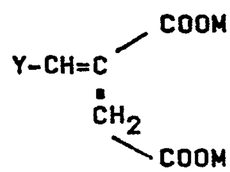

(II),

wobei Y ein geradkettiger oder verzweigter Alkylrest mit 3 bis 18 C-Atomen ist. Diese Verbindungen können durch Kondensation eines Aldehyds mit einem Bernsteinsäureester und anschließende Verseifung hergestellt werden.

G. Als weitere übliche Zusatzstoffe kommen in Frage:

Schrumpfmindernde Polymerisate, wie z.B. Polystyrol, Polymethylmethacrylat, Polyvinylacetat, Polyethylen, Polybutadien, Polyisopren, Celluloseester, Polyvinylchlorid und entsprechende Copolymere und Pfropfcopolymere, wie z.B. schlagzähes Polystyrol in Frage. Sie werden vorzugsweise als 30 bis 40 gew.-%ige Lösungen in Monomeren B eingesetzt. Es eignen sich auch Kondensationspolymere, wie gesättigte Polyester oder Polyesterurethane, die in der Komponente A löslich sind und bei der Warmhärtung eine disperse Phase bilden. Die schrumpfmindernden Zusätze werden in Mengen von 0 bis 30 Gew.-%, vorzugsweise 3 bis 20 Gew.-%, bezogen auf A + B, eingesetzt. Als elastifizierende Zusätze, die zusätzlich auch schrumpfmindernd wirken, eignen sich kautschukartige Blockcopolymere, insbesondere solche aus 40 bis 95 Gew.-% eines Diolefins, z.B. Butadien, Isopren oder Chloropren, und 60 bis 5 Gew.-% eines Vinylaromaten, z.B. Styrol oder p-Methylstyrol.

Geeignete Füllstoffe sind z.B. übliche feinpulvrige oder körnige anorganische Füllstoffe, wie Kreide, Kaolin, Quarzmehl, Dolomit, Schwerspat, Metallpulver, Aluminiumoxidhydrat, Zement, Talkum, Kieselgur, Holzmehl, Holzspäne, Pigmente und dergleichen. Sie werden in Mengen von 0 bis 250 Gew.-%, vorzugsweise 20 bis 150 Gew.-%, bezogen auf A + B, eingesetzt.

Weitere Zusatzstoffe sind z.B. Inhibitoren, wie Hydrochinon, 2,6-Dimethylhydrochinon, tert.-Butylbrenzkatechin, p-Benzochinon, Chloranil, 2,6-Dimethylchinon, Nitrobenzole, wie m-Dinitrobenzol, Thiodiphenylamin oder Salze von N-Nitroso-N-cyclohexylhydroxylamin sowie deren Gemische. Die Inhibitoren sind in den Formmassen im allgemeinen in einer Menge von 0,005 bis 0,2, vorzugsweise 0,01 bis 0,1 Gew.-%, bezogen auf die Komponenten A + B, enthalten.

Als Gleitmittel kommen beispielsweise Zink-, Magnesium- und Calciumstearat sowie Polyalkylenetherwachse in Betracht.

Geeignete Härtungsbeschleuniger sind z.B. Oktoate oder Naphthenate von Kupfer, Blei, Calcium, Magnesium, Cer und insbesondere von Mangan und Cobalt; ferner aromatische Amine, wie Dimethylanilin oder Diethylanilin.

Ein bevorzugtes Verfahren zur Herstellung der erfindungsgemäßen Formmassen besteht darin, daß man zunächst eine Lösung aus dem ungesättigten Polyester A in den Monomeren B herstellt, die außerdem das Peroxid D, das Eindickmittel E, den Eindickbeschleuniger F und gegebenenfalls die weiteren Zusatzstoffe G enthält, und mit diesem flüssigen Gemisch die Verstärkungsfasern C tränkt. Das Eindicken des Harzgemisches geschieht durch polymeranaloge Umsetzungen des Endickmittels mit den Endgruppen des ungesättigten Polyesters, wobei der Viskositätsanstieg durch Molekulargewichtsvergößerung verursacht wird. Das Eindicken kann bei Raumtemperatur erfolgen, es dauert dann im allgemeinen einige Stunden. Durch Erhöhen der Temperatur kann es beschleunigt werden. Bevorzugt wird dann bei Temperaturen zwischen 50 und 80°C 2 bis 10 min lang eingedickt. Bei dem Eindickprozeß entstehen klebfreie und lagerfähige Halbzeuge von genügend hoher Viskosität, die je nach Art und Menge der Eindickmittel, Füllstoffe bzw. Verstärkungsmaterialien lederartige oder steife Konsistenz haben. Es entstehen flächige Halbzeuge, sogenannte SMC-Formmassen. Diese können mit Hilfe einer Presse unter einem Druck von 0,4 bis 15 $N.mm^{-2}$ bei Temperaturen von 80 bis 180°C, vorzugsweise zwischen 120 und 160°C zu Formteilen verarbeitet werden. So lassen sich z.B. auf dem Kraftfahrzeugsektor Karosserieteile, wie Motorhauben, Heckklappen und Schiebedächer oder Stoßfänger herstellen, auf dem Elektrosektor Kabelverteilungskästen, oder auf dem Möbelsektor Stühle, Heizgehäuse oder Schalen. Derartige Produkte zeichnen sich gegenüber Metallen durch leichteres Gewicht, hohe Festigkeit in Bezug auf das Gewicht, gute Korrosionsbeständigkeit und eine Flexibilität in der Gestaltung der Teile aus.

Die in den Beispielen genannten Teile und Prozente beziehen sich auf das Gewicht.

Herstellung der Polyesterharzlösungen

A1: Ein ungesättigter Polyester mit Säurezahl 28 wurde hergestellt durch Umsetzung von Maleinsäureanhydrid und Propylenglykol-1,2 im Molverhältnis 1 : 1,1. Er wurde 65 %ig in Styrol gelöst und mit 150 ppm Hydrochinon stabilisiert.

A2: Ein ungesättigter Polyester mit Säurezahl 20 wurde hergestellt durch Umsetzung von Maleinsäureanhydrid, Terephthalsäure und Propylenglykol-1,2 im Molverhältnis 1 : 1 : 2,1. Er wurde 60 %ig in Styrol gelöst und mit 100 ppm Hydrochinon und 100 ppm Trimethylhydrochinon stabilisiert.

A3: Ein ungesättigter Polyester mit Säurezahl 27 wurde hergestellt durch Umsetzung von Maleinsäure, o-Phthalsäure, Butandiol-1,3 und Propylenglykol-1,2 im Molverhältnis 1 : 0,3 : 1 : 0,5. Er wurde 70 %ig in Styrol gelöst und mit 150 ppm Hydrochinon stabilisiert.

Beispiel 1

Um den Einfluß der alkylsubsituierten Dicarbonsäure auf das Eindickverfahren ungesättigter Polyesterharze mit Erdalkalioxiden zu prüfen, wurden Mischungen aus 100 Teilen Harz A2, 150 Teilen $CaCO_3$ als Füllstoff (MILLICARB) und 1,5 Teilen Magnesiumoxid mit unterschiedlichen Mengen Diisobutenylbernsteinsäure versetzt und die Viskosität nach 3 Stunden und nach 1 Woche Lagerung bei Raumtemperatur gemessen.

Die Ergebnisse in Tabelle 1 zeigen, daß die Viskosität der Harz/Füllstoffmischungen in Gegenwart von Diisobutenylbernsteinsäure deutlich schneller ansteigt als ohne diesen Zusatz. Innerhalb von 3 h wird bereits eine preßfähige Konsistenz erreicht.

Tabelle 1

| Teile Diisobutenylbernsteinsäure | Viskosität[1)] [mPa.s] (23°C) nach 3 h | nach 7 d |
|---|---|---|
| 0 | $5,6.10^5$ | $6,9.10^7$ |
| 0,5 | $1,5.10^6$ | $2,2.10^8$ |
| 2 | $1,8.10^7$ | $2,0.10^8$ |
| 1 | $1,3.10^7$ | $2,0.10^8$ |

1) gemessen mit Brookfield-Viskosimeter (HB 5-Spindel)

Beispiel 2

Mit einem schnellaufenden Rührwerk (ca. 1000 U/min) wurde folgende Mischung hergestellt:

100 Teile Harz A2
100 Teile Füllstoff MICRODOL (Dolomit)
5 Teile Ca-Stearat
2,5 Teile tert. Butylperbenzoat (50 %ig)
1,3 Teile Magnesiumoxid
1 Teil Diisobutenylbernsteinsäure

Eine Glasfasermatte (450 g/m$^2$) wurde mit dieser Mischung getränkt und 24 Stunden bei 23°C zwischen Polyethylenfolien gelagert. Danach ließen sich die Abdeckfolien abziehen, und die imprägnierte Matte wurde in einem tellerartigen Preßwerkzeug (4 min, 145°C und 7,45 N/mm$^2$) zu einem gehärteten Formstoff mit guter Oberfläche verarbeitet.

Beispiel 3

Mit einem schnellaufenden Rührwerk (ca. 1000 U/min) wurde folgende Mischung hergestellt:

2500 Teile Harz A3
125 Teile Styrol
0,6 Teile p-Benzochinon
38 Teile tert. Butylperbenzoat
25 Teile Diisobutenylbernsteinsäure
200 Teile Polyethylen-Pulver als Gleitmittel
38 Teile Magnesiumoxid
120 Teile Zn-Stearat
1500 Teile HYDROCARB (Füllstoff Kreide)
2250 Teile OMYA BLR 3 (beschichtete Kreide)

Auf einer Prepreganlage mit nachgeschalteter Wärmezone (Dreietagen-Düsenbandtrockner von 2,5 m Länge, Wärmezone 6 m lang) wurden geschnittene Rovings (2,6 cm lang) zwischen Polyethylenfolien getränkt und mit einer Verweilzeit von 7 min durch die Wärmezone (80°C) bewegt. Danach wurde mit Luft auf Raumtemperatur abgekühlt, die Abdeckfolien abgezogen und die imprägnierte Matte in einem Stahlwerkzeug (43 x 50 cm) zu einem dünnwandigen (2,5 mm) Formteil verpreßt (60 bar, 145°C, 3 min). Das gehärtete Formteil zeigte eine glänzende Oberfläche.

Beispiel 4

Mit einem schnellaufenden Rührwerk wurde folgende Mischung hergestellt:

60 Teile Harz A1
40 Teile einer 35 %igen styrolischen Polyvinylacetatlösung
1,5 Teile Magnesiumoxid
150 Teile Diisobutenylbernsteinsäure

Nach 3 Stunden Lagerung bei Raumtemperatur (23°C) wurde die Viskosität mit einem Brookfield-Viskosimeter (HB5) gemessen. Sie betrug $3.10^8$ [m Pas.] (23°C).

Wurde der Versuch ohne den Zusatz von Diisobutylenbernsteinsäure wiederholt, stellte sich nach 3 Stunden bei 23°C eine Viskosität von nur $4,1.10^6$ ein.

Für die Herstellung eines schrumpfarmen SMC (Sheet Molding Compound) wurde mit einem schnellaufenden Rührwerk aus folgenden Komponenten eine Mischung hergestellt:

| | | |
|---|---|---|
| 60 | Teile Harz A1 | |
| 40 | Teile Polyvinylacetatlösung | (35 % PVAC in Styrol, 100 ppm Hydrochinon + 1200 ppm 2,6-Dimethylchinon) |
| 1 | Teil Diisobutylenbernsteinsäure | |
| 1,5 | Teile tert. Butylperbenzoat | |
| 4,5 | Teile Zinkstearat | |
| 2 | Teile Magnesiumhydroxid | |
| 0,75 | Teile Magnesiumoxid | |
| 60 | Teile Füllstoff Kreide (HYDROCARB) | |
| 90 | Teile Füllstoff Kreide (OMYA BLR 3, beschichtet) | |

Eine Glasfasermatte (450 $g/m^2$) wurde mit dieser Mischung getränkt und 8 min bei 80°C im Wärmeschrank zwischen Polyethylenfolien gelagert. Nach Abkühlung auf Raumtemperatur wurden die Abdeckfolien entfernt und das SMC in einem tellerartigen Stahlwerkzeug (3 min, 145°C und 7,5 $N/nn^2$) zu einem gehärteten Formstoff verpreßt.

Patentansprüche

1. Härtbare ungesättigte Polyesterformmassen, enthaltend ein Gemisch aus

A. einem ethylenisch ungesättigten Polyester oder einem endständig ungesättigten Vinylester,

B. ethylenisch ungesättigten, mit A copolymerisierbaren Monomeren,

C. 5 bis 400 Gew.-%, bezogen auf A + B faserförmiger Verstärkungsmittel,

D. 0,1 bis 3 Gew.-%, bezogen auf A + B organischen Peroxiden,

E. 0,2 bis 5 Gew.-%, bezogen auf A + B, eines Eindickmittels,

F. 0,2 bis 5 Gew.-%, bezogen auf A + B, eines Eindickbeschleunigers, sowie gegebenenfalls

G. üblichen schrumpfmindernden oder elastifizierenden organischen Polymeren, pulverförmigen Füllstoffen, Inhibitoren, Gleitmittel, Trennmittel, Pigmente und Härtungsbeschleuniger,

dadurch gekennzeichnet, daß der Eindickbeschleuniger F eine α-substituierte Bernsteinsäure ist.

2. Härtbare Formmassen nach Anspruch 1, dadurch gekennzeichnet, daß die α-substituierte Bernsteinsäure die allgemeine Formel

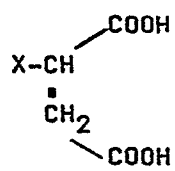

(I)

aufweist, wobei X folgende Bedeutung haben kann:

a) ein geradkettiger oder verzweigter Alkenylrest mit 3 bis 18 Kohlenstoffatomen,

b) ein geradkettiger oder verzweigter Alkylrest mit 3 bis 18 Kohlenstoffatomen,

c) ein geradkettiger oder verzweigter Alkylthiorest mit 3 bis 18 Kohlenstoffatomen,

d) ein geradkettiger oder verzweigter Alkylsulfonrest mit 3 bis 18 Kohlenstoffatomen,

e) ein geradkettiger oder verzweigter Alkoxyrest mit 3 bis 18 Kohlenstoffatomen.

3. Härtbare Formmassen nach Anspruch 1, <u>dadurch gekennzeichnet</u>, daß die α-substituierte Bernsteinsäure die allgemeine Formel

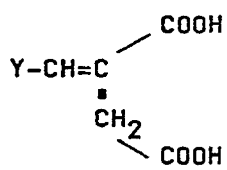

(II)

aufweist, wobei Y ein geradkettiger oder verzweigter Alkylrest mit 3 bis 18 Kohlenstoffatomen ist.

Europäisches Patentamt

**EUROPÄISCHER RECHERCHENBERICHT**

0147727

Nummer der Anmeldung

EP 84 11 5278

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | FR-A-1 523 972 (CHEMISCHE WERKE HÜLS) * Zusammenfassung; Seite 3, linke Spalte, Zeilen 6-26 * | 1,2 | C 08 L 67/06<br>C 08 L 63/10<br>C 08 K 5/09<br>C 08 K 5/37<br>C 08 K 5/42 |
| X | FR-A-1 559 090 (BRITISH RESIN PRODUCTS) * Zusammenfassung; Seite 3, linke Spalte, Zeilen 33-39 * | 1,2 | |
| X | CHEMICAL ABSTRACTS, Band 85, Nr. 22, 29. November 1976, Seiten 50,51, Nr. 161262g, Columbus, Ohio, US; & JP - A - 76 54686 (NIPPON SHOKUBAI KAGAKU KOGYO CO., LTD.) 13.05.1976 * Zusammenfassung * | 1,2 | **RECHERCHIERTE SACHGEBIETE (Int. Cl.4)** |
| X | CHEMICAL ABSTRACTS, Band 86, Nr. 14, 4. April 1977, Seite 62, Nr. 91030z, Columbus, Ohio, US; & JP - A - 76 134 742 (NIPPON SHOKUBAI KAGAKU KOGYO CO., LTD.) 22.11.1976 * Zusammenfassung * | 1,2 | C 08 L<br>C 08 K |

Der vorliegende Recherchenbericht wurde für alle Patentansprüche erstellt.

| Recherchenort | Abschlußdatum der Recherche | Prüfer |
|---|---|---|
| DEN HAAG | 27-03-1985 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82